(19)

Europäisches
Patentamt
European
Patent Office
Office européen
des brevets

(11) **EP 3 499 429 A1**

(12) **EUROPEAN PATENT APPLICATION**

(43) Date of publication:
**19.06.2019 Bulletin 2019/25**

(51) Int Cl.:
**G06N 3/08** *(2006.01)*　　　**H04L 29/06** *(2006.01)*

(21) Application number: **17206738.1**

(22) Date of filing: **12.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Institute for Information Industry Taipei (TW)**

(72) Inventors:
• **Lai, Chia-Min**
　**242 New Taipei City (TW)**
• **Lu, Chia-Yu**
　**116 Taipei City (TW)**

(74) Representative: **Michalski Hüttermann & Partner Patentanwälte mbB**
**Speditionstraße 21**
**40221 Düsseldorf (DE)**

(54) **BEHAVIOR INFERENCE MODEL BUILDING APPARATUS AND METHOD**

(57)　A behavior inference model building apparatus and a behavior inference model building method thereof are provided. The behavior inference model building apparatus converts a plurality of program operation sequences of a plurality of program operation sequence data into a plurality of word vectors through a word embedding model, and inputs the first M word vectors of the word vectors, corresponding to each program operation sequence data, into a generative adversarial network (GAN) model to train and optimize the GAN model. The behavior inference model building apparatus integrates the word embedding model and the generator of the optimized GAN model to build a behavior inference model.

Fig. 6

**Description**

**BACKGROUND OF THE INVENTION**

Field of the Invention

The present invention relates to a behavior inference model building apparatus and a behavior inference model building method thereof. Specifically, the behavior inference model building apparatus of the present invention builds a behavior inference model based on a word embedding model and a generator of the optimized generative adversarial network model.

Descriptions of the Related Art

With the development of science and technology, users can obtain various applications from the Internet. Some applications may destroy the user's computer system during execution, causing the files in the computer be damaged or the user's personal information be stolen.

At present, the detection mechanism of malware mainly utilizes the signature-based comparison to determine whether the application is a malicious program and defends against attacks of these malicious programs. However, the detection mechanism of signature-based comparison can only detect the malicious programs based on the known sample features, and need to extract a certain number of features during the execution of the application to have the opportunity to determine whether the application being executed currently is malicious program. In this case, when a malicious program is detected, the malicious program may have damaged the file on the computer or have stolen the user's personal information.

In view of the above, how to establish a behavior inference model which can accurately infer the follow-up program operations in the early execution period of the application to prevent the computer file from being damaged or prevent the user's personal information from being stolen is an urgent needed for the industry.

**SUMMARY OF THE INVENTION**

The primary objective of this invention is to provide a behavior inference model that can accurately infer subsequent program operations in the early execution period of an application to reliably prevent the files in the computer from being damaged or prevent the user's personal information from being stolen.

To achieve the above objective, the present invention discloses a behavior inference model building apparatus comprising a storage and a processor. The storage is configured to store a plurality of program operations sequence data. Each of the program operation sequence data records a plurality of program operation sequences. The processor is electrically connected to the storage and is configured to execute the following steps of: (a) converting the program operation sequences of each of the program operation sequence data into a plurality of word vectors through a word embedding model; (b) retrieving, for each of the program operation sequence data, first M word vectors of the word vectors as M input vectors of a Generative Adversarial Network (GAN) model, M being a positive integer; (c) generating, for each of the program operation sequence data, a plurality of inference word vectors by computing the M input vectors through a generator of the GAN model; (d) performing, for each of the program operation sequence data, a real/fake discrimination between the word vectors and the inference word vectors through a discriminator of the GAN model ; (e) backpropagating a discrimination result of the real/fake discrimination to the generator to adjust a parameter setting of the generator; (f) repeating the step (c) to the step (e) to train the GAN model to optimize the GAN model; and (g) integrating the word embedding model and the generator of the optimized GAN model to build a behavior inference model.

In addition, the present invention further discloses a behavior inference model building method for a behavior inference model building apparatus. The behavior inference model building apparatus comprises a storage and a processor. The storage stores a plurality of program operation sequence data. Each of the program operation sequence data records a plurality of program sequences. The behavior inference model building method is executed by the processor and comprises the following steps of: (a) converting the program operation sequences of the program operation sequence data into a plurality of word vectors through a word embedding model; (b) retrieving, for each program operation sequence data, first M word vectors of the word vectors as M input vectors of a Generative Adversarial Network (GAN) model, M being a positive integer; (c) generating, for each of the program operation sequence data, a plurality of inference word vectors by computing the M input vectors through a generator of the GAN model; (d) performing, for each of the program operation sequence data, a real/fake discrimination between the word vectors and the inference word vectors through a discriminator of the GAN model; (e) backpropagating a discrimination result of the real/fake discrimination to the generator to adjust a parameter setting of the generator; (f) repeating the step (c) to the step (e) to train the GAN model to optimize the GAN model; and (g) integrating the word embedding model and the generator of the optimized GAN model to build a behavior inference model.

The detailed technology and preferred embodiments implemented for the subject invention are described in the following paragraphs accompanying the appended drawings for people skilled in this field to well appreciate the features of the claimed invention.

## BRIEF DESCRIPTION OF THE DRAWINGS

FIG. **1** is a schematic view of a behavior inference model building apparatus 1 according to the present invention;
FIG. **2** is a schematic view of a generative adversarial network;
FIG. **3** is a schematic view of a program operation sequence data;
FIG. **4** depicts the distribution of each word vector in a two-dimensional space;
FIG. **5** depicts each word vector group after clustering;
FIG. **6** is a flowchart diagram of a behavior inference model building method according to the present invention; and
FIG. **7** is a flowchart diagram of building an abnormal behavior detection model in a behavior inference model building method according to the present invention.

## DESCRIPTION OF THE PREFERRED EMBODIMENT

In the following description, the present invention will be explained with reference to embodiments thereof. However, these embodiments of the present invention are not intended to limit the present invention to any environment, applications or implementations described in these embodiments. Therefore, description of these embodiments is only for purpose of illustration rather than to limit the scope of the present invention. It shall be appreciated that, in the following embodiments and the attached drawings, elements unrelated to the present invention are omitted from depiction; and dimensional relationships among individual elements in the attached drawings are illustrated only for ease of understanding, but not to limit the actual scale.

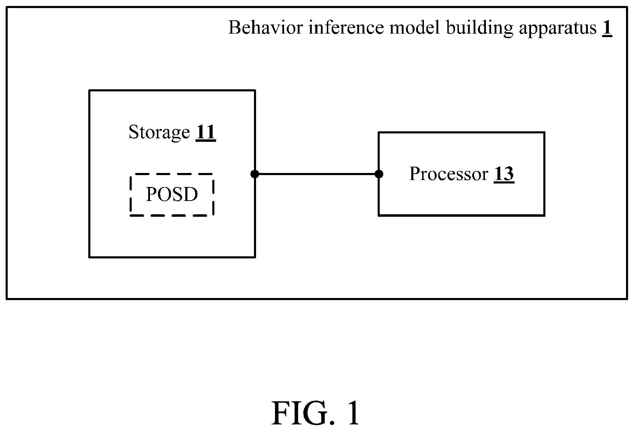

The first embodiment of the present invention is shown in **FIGs. 1-3**. FIG. **1** is a schematic view of a behavior inference model building apparatus **1** according to the present invention. The behavior inference model building apparatus **1** comprises a storage **11** and a processor **13**. The processor **13** is electrically connected to the storage **11**. The storage **11** is configured to store a plurality of program operation sequence data **POSD**. Each of the program operation sequence data **POSD** records a plurality of program operation sequences. For example, the program operation sequences may be a dynamic program operation sequence, such as an Application Programming Interface (API) sequence or a system call sequence, but is not limited thereto.

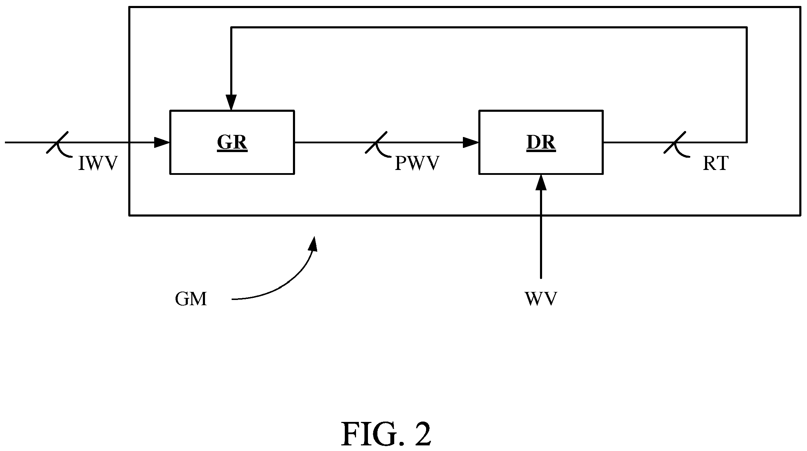

The processor **13** converts the program operation sequences of each of the program operations sequence data **POSD** into a plurality of word vectors **WV** through a word embedding model. The word embedding model may, for example, be a Word-to-Vector (Word2Vec) model or a One-Hot Encoding model. Subsequently, as shown in **FIG. 2,** for each of the program operation sequence data **POSD,** the processor **13** retrieves the first M word vectors of the word vectors **WV** as M input vector **IWV** of a Generative Adversarial Network (GAN) model **GM,** where M is a positive integer. It should be noted that the value of M can be set by the developer based on the type of dynamic program operation sequence to determine the number of word vectors that are input to the GAN model **GM** as a basis for inference.

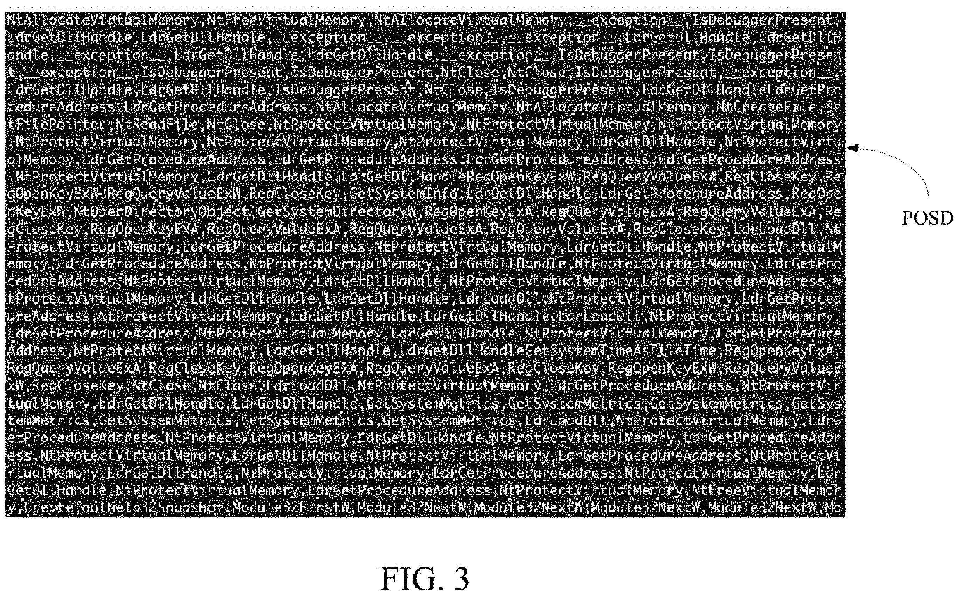

Taking the API sequence as an example, the processor **13** may retrieve 100 API sequences of an executing application program through a tracking program and store them as a program operation sequence datum **POSD,** as shown in **FIG. 3**. It should be noted that based on the layout restrictions, the API sequences shown in **FIG. 3** is only parts of the program operation sequence datum **POSD.** Subsequently, as described above, for each of the program operation sequence data **POSD,** the processor **13** converts 100 API sequences in the program operation sequence data **POSD** into 100 word vectors **WV** through the word embedding model. Next, for each of the program operation sequence data **POSD,** the processor **13** takes the first 20 word vectors of the 100 word vectors **WV** as the input vectors **IWV** of the GAN model **GM.**

Referring to **FIG. 2,** the processor **13** computes the M input vectors **IWV** for each of the program operation sequence data **POSD** through a generator **GR** of the GAN model **GM** to generate a plurality of inference word vectors **PWV.** The number of inference word vectors **PWV** is the same as the number of the word vectors **WV** (e.g., 100); however, this number can also be set by the developer based on the type of dynamic program operation sequence. For each of the program operation sequence data **POSD,** the processor **13** performs a real/fake discrimination between the word vectors **WV** and the inference word vectors **PWV** through a discriminator **DR** of the GAN model **GM.** Then, the processor **13** backpropogates a discrimination result **RT** of the real/fake discrimination back to the generator **GR** to adjust a parameter setting of the generator **GR.**

After the parameter setting of the generator **GR** is adjusted, for each of the program operation sequence data **POSD,** the processor **13** will re-compute the input word vectors **IWV** to generate a plurality of new inference word vectors **PWV,** perform the real/fake discrimination through the discriminator **DR** and backpropogate the discrimination result **RT** to the generator **GR.** By repeatedly performing the aforementioned steps (i.e., generating the inference word vector **PWV,** performing the real/fake discrimination, backpropogating the discrimination result **RT,** and adjusting the parameter setting of the generator **GR**), the processor **13** trains the GAN model **GM** to optimize the GAN model **GM,** and finally integrates the word embedding model and the generator **GR** of the optimized GAN model **GM** to generate the behavior inference model.

Based on the foregoing description, it is understood by those of ordinary skill in the art that the similarity between the inference word vectors **PWV** (i.e., the simulated word vectors) generated by the generator **GR** after adjusting the parameter settings and the word vectors **WV** (i.e., the real word vectors) will be higher and higher generally, and the discriminator **DR** also adjusts the setting of related parameters for discrimination according to the inference word vectors **PWV** generated by the generator **GR** and the discrimination result **RT**. Therefore, as the generator **GR** and the discriminator **DR** compete against each other, the optimization training of the GAN model **GM** will be achieved once it is hard for the discriminator **DR** to decide the real /fake between the inference word vector **PWV** and the word vector **WV** of each of the program operation sequence data **POSD**.

For example, the objective function for optimizing the generator **GR** can be represented as the following equation:

$$\frac{1}{m} \sum_{1}^{m} \log(1 - D(G(z)))$$

where m represents the total number of program operation sequence data **POSD,** z represents M input vectors **IWV,** G(z) represents the inference word vectors **PWV** generated by the generator **GR**, D(G(z)) represents the probability that the discriminator **DR** determines the inference word vectors **PWV** are real.

In addition, the objective function for optimizing the discriminator **GR** can be represented as the following equation:

$$\frac{1}{m} \sum_{1}^{m} [\log D(X) + \log(1 - D(G(z)))]$$

where m represents the total number of program operation sequence data **POSD,** X represents the word vectors **WV** corresponding to each of the program operation sequence data **POSD,** D(X) represents the probability that the discriminator **DR** determines the word vectors **WV** are real, z represents the M input vectors **IWV,** G(z) represents the inference word vectors **PWV** generated by the generator **GR,** D(G(z)) represents the probability that the discriminator DR determines the inference word vectors **PWV** are real.

Unlike the conventional GAN model in the prior art which randomly generates vectors and input the vectors into the generator **GR,** the present invention inputs the first M word vectors of the program operation sequence data **POSD** into the generator **GR** of the GAN model. Therefore, the present invention trains the GAN model which can be used for behavior inference to predict program operation sequences that have not been generated yet. Since those of ordinary skill in the art can understand the details of training the GAN model based on the foregoing description, the details will not be further described herein again.

As mentioned above, the program operations sequence retrieved by the present invention may be dynamic program operation sequence. Therefore, those of ordinary skill in the art understand that the behavior inference model building apparatus of the present invention can build the behavior inference model for any specific program operation sequences, such as the program operation sequences are retrieved by the program operation the tracking program or recorded by the operating system itself through monitoring the program being executed. In other words, the method for building a behavior inference model of the present invention is applied to any program operation sequences which are generated when a terminal device executes a program. For example, the program operation sequence data **POSD** may include a plurality of abnormal program operation sequence data, and each of the abnormal program operation sequence data is associated with a malicious program. As another example, the program operation sequence data **POSD** may be a log file generated by the operation system when monitoring the program being executed.

In addition, the behavior reference model generated by the present invention can be compiled into an executable program, run in an operation system, and cooperate with an abnormal behavior detection program. Accordingly, the behavior inference model of the present invention can infer the subsequent program operation sequences based on the first several program operation sequences in the early execution period of the program, and provide the inferred program operation sequences to the abnormal behavior detection program to determine whether an abnormal behavior exists. For example, the abnormal behavior detection program may be an antivirus program. The behavior inference model of the present invention infers program operation sequences of a program that has just been executed and provides them to the antivirus program to determine whether the program is a malicious program.

A second embodiment of the present invention is shown in **FIGs. 3-5.** The second embodiment is an extension of the first embodiment. In this embodiment, the storage **11** further stores a plurality of behavior labels (not shown). Each of the program operation sequence data corresponding to one of the behavior labels. The behavior labels, for example, may be a normal behavior label, an abnormal behavior label, etc., but not limited thereto. In an embodiment, the program operation sequence data **POSD** includes a plurality of abnormal program operation sequence data, and each of the abnormal program operation sequence data is associated with a malicious program. In this case, the behavior labels may further include an Adware program, a Worm program, a Trojan program, etc., but are not limited thereto.

As described in the first embodiment, the processor **13** converts the program operation sequences of each of the program operation sequence data **POSD** into a plurality of word vectors **WV** through a word embedding model. In this embodiment, the processor **13** further clusters the word vectors **WV** of the program operation sequence data **POSD** into a plurality of word vector groups based on a clustering algorithm, and compares the program operation sequences of each of the program operation sequence data **POSD** severally with at least one of the program operation sequences corresponding to at least one of the word vectors included in each of the word vector groups to generate a feature vector of each of the program operation sequence data.

Take the API sequence as an example, the program operation sequence includes "GetSystemInfo", "GetFileSize", "GetSystemDirectoryW", "GetSystemMetrics", "RegQueryValueExA", "RegOpenKeyExA", "LdrLoadDll", "NtCreatFile", "NtReadfile", "NtClose", "NtOpenDirectoryObject", the processor **13** computes the program operation sequences through the word embedding model and generates the word vectors **V1-V11** corresponding to the program operation sequences, respectively. Here, it is assumed that the word vector **V1** corresponds to "GetSystemInfo", the word vector **V2** corresponds to "GetFileSize", the word vector **V3** corresponds to "GetSystemDirectoryW", the word vector **V4** corresponds to "GetSystemMetrics", the word vector **V5** corresponds to "RegQueryValueExA", the word vector **V6** corresponds to "RegOpenKeyExA", the word vector **V7** corresponds to "LdrLoadDll", the word vector **V8** corresponds to "NtCreatFile", the word vector **V9** corresponds to "NtReadfile", the word vector **V10** corresponds to "NtClose", the word vector **V11** corresponds to "NtOpenDirectoryObject".

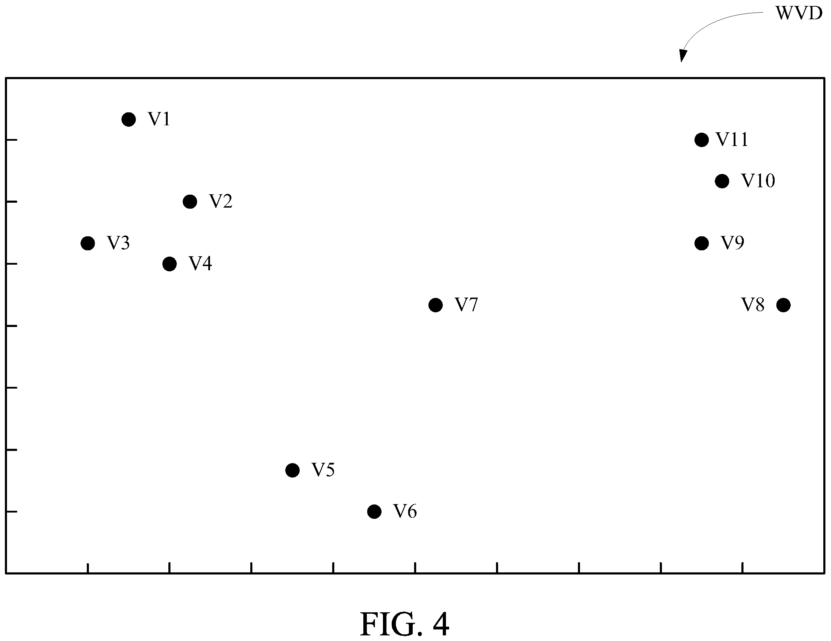

**FIG. 4** shows the word vectors **V1-V11** in a word vector distribution space **WVD**. It should be noted that, in order to simplify the explanation, the word vector distribution space **WVD** in this embodiment represents the distribution of the word vectors in a two-dimensional space. However, in practice, according to the type of program operation sequence data, developers can decide on the dimension of the word vector distribution space **WVD**. Since those of ordinary skill in the art can know how to set the spatial dimension of the output, it will not be further described here.

In the word vector distribution space **WVD**, the word vectors whose positions are close have the similar part of speech or semantic meaning. Therefore, the present invention clusters these word vectors according to a clustering algorithm of unsupervised learning as a basis for subsequently retrieving features of each of the program operation sequence data **POSD**. In the present invention, the clustering algorithm may be one of an Affinity Propagation (AP) clustering algorithm, a Spectral clustering algorithm, a Fuzzy C-means (FCM) clustering algorithm, an Iterative Self-Organizing Data Analysis Technique Algorithm (ISODATA) clustering algorithm, a K-means clustering algorithm, a Complete-Linkage (CL) clustering algorithm, a Single-Linkage (SL) clustering algorithm and a Ward's method clustering algorithm, but not limited thereto.

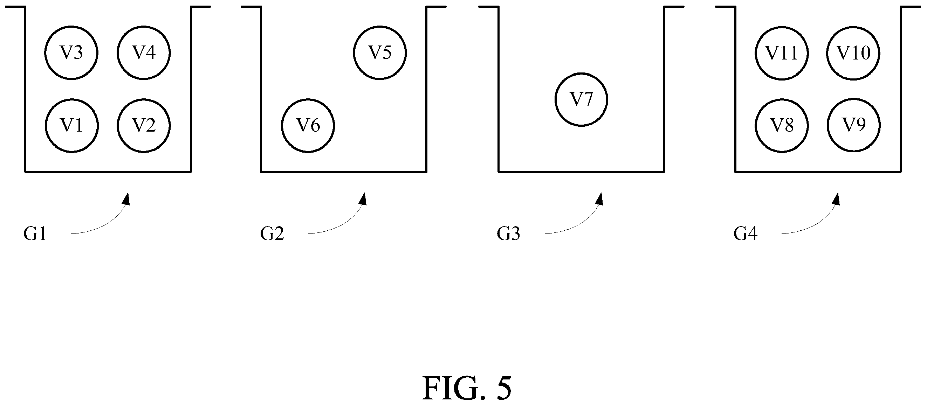

For example, the processor **13** clusters the word vectors into four word vector groups **G1-G4** according to the AP clustering algorithm, as shown in **FIG. 5**. The word vector group **G1** includes the word vectors **VI-V4,** the word vector group **G2** includes the word vectors **V5-V6,** the word vector group **G3** includes the word vectors **V7,** and the word vector group **G4** includes the word vectors **V8-V11.** It should be note that the number of word vector groups can be determined by the developer himself/herself by setting the parameters of the clustering algorithm (e.g., directly setting the number of required groups, or setting the number of iterations performed by the clustering algorithm). Since the detailed operation of clustering based on the clustering algorithm can be understood by those of ordinary skill in the art, it will not be further described here.

After obtaining the word vector groups, the processor **13** severally compares the program operation sequences of the program operation sequence data **POSD** with at least one program operation sequence corresponding to at least one word vectors included in each word vector group to generate a feature vector of each of the program operation sequence data **POSD.** For example, it is assumed that in a program operation sequence data **POSD,** there are program operation sequences corresponding to the word vector **V2,** the word vector **V6,** the word vector **V8** and the word vector **V11** Thus, for this program operation sequence data **POSD,** the feature value of the word vector group **G1** is 1, the feature value of the word vector group **G2** is 1, the feature value of the word vector group **G3** is 0, and the feature value of the word vector group **G4** is 2, so the feature vector of the program operation sequence data **POSD** is (1,1,0,2). For another example, it is assumed that in another program operation sequence data **POSD,** there are program operation sequences corresponding to the word vector **V1,** the word vector **V2,** the word vector **V4,** the word vector **V5,** the word vector **V7,** the word vector **V9,** and the word vector **V10.** Thus, for the another program operation sequence data **POSD,** the feature value of the word vector group **G1** is 3, the feature value of the word vector group **G2** is 1, the feature value of the word vector group **G3** is 1, and the feature vector of the word vector group **G4** is 2, so the feature vector of the another program operation sequence data **POSD** is (3,1,1,2).

It should be noted that the aforementioned comparison for generating the feature vectors is implemented based on whether each of the program operation sequence data **POSD** has the at least one program operation sequence corresponding to at least one the word vector included in each word vector group. However, in other embodiments, the comparison for generating the feature vectors may also be implemented based on how many at least one program operation sequence corresponding to at least one at least one the word vector included in each word vector group in each of the program operation sequence data **POSD.** For example, it is assumed that there are five program operation sequences corresponding to the word vectors **V2,** three program operation sequences corresponding to the word vectors **V6,** one program operation sequence corresponding to the word vectors **V8,** and three program operations sequences corresponding to the word vector **V11** in a program operation sequence data **POSD.** Thus, for this program operation sequence datum **POSD,** the feature value of the word vector group **G1** is 5, the feature value of the word vector group **G2** is 3, the feature value of the word vector group **G3** is 0, and the feature value of the word vector group **G4** is 4, so the feature vector of the program operation sequence datum **POSD** is (5, 3, 0, 4).

After generating the feature vectors of each of the program operation sequence data **POSD,** the processor **13** performs a supervised learning of a classification algorithm to generate a classifier for classifying the feature vectors to correspond to the behavior labels, according to the feature vectors and the behavior labels. For example, the classification algorithm may be one of a Support Vector Machine (SVM) algorithm, a Decision Tree (DT) algorithm, a Bayes algorithm, and a Nearest Neighbors (NN) algorithm, but it is not limited thereto.

The foregoing supervised learning is performed in order to classify the feature vectors into the appropriate categories through the classification algorithm so as to correspond to the behavior labels. For example, the program operation sequence data **POSD** corresponding to the malicious advertisement program label can be reliably classified into the same category, the program operation sequence data **POSD** corresponding to the worm program label can be reliably classified into the same category, the program operation sequence data **POSD** corresponding to the Trojan label can be reliably classified into the same category, and the program operation sequence data **POSD** corresponding to the normal behavior label can be reliably classified into the same category.

Finally, the processor 13 builds an abnormal behavior detection model according to the word vector groups and the classifier. Therefore, the processor **13** may further integrate the abnormal behavior detection model, the word embedding model and the generator **GR** of the optimized GAN model to build the behavior inference model. In this way, the behavior inference model of the present invention can predict the program operation that have not been executed yet by inferring the word vectors of the program operation sequences that have not been generated according to the word vectors of the first several program operation sequences, and detect an abnormal behavior based on the program operation sequences of the inferred word vectors to prevent the files on the computer from damaging or prevent the user's personal information from stealing.

In other embodiments, after building the abnormal behavior detection model, the processor **13** may test the abnormal behavior detection model according to a plurality of test program operation sequence data. Based on a detection rate, the processor **13** determines the accuracy rate of the abnormal behavior detection model identifies the test program operation sequence data so that the developer can re-perform the foregoing training to build an abnormal behavior detection model by adjusting related parameter settings of the word embedding model, the clustering algorithm and the classification algorithm according to the accuracy rate. Accordingly, the present invention can build different abnormal behavior detection models for different types of program operation sequence data through the foregoing operation, so as to detect abnormal behavior of various dynamic program operation sequences or static program operation sequences. Similarly, the behavior inference model built by the present invention can be compiled into an executable program and run on an operating system to provide the operating system to detect abnormal behaviors (e.g., detecting malware, detecting illegal operations, etc.).

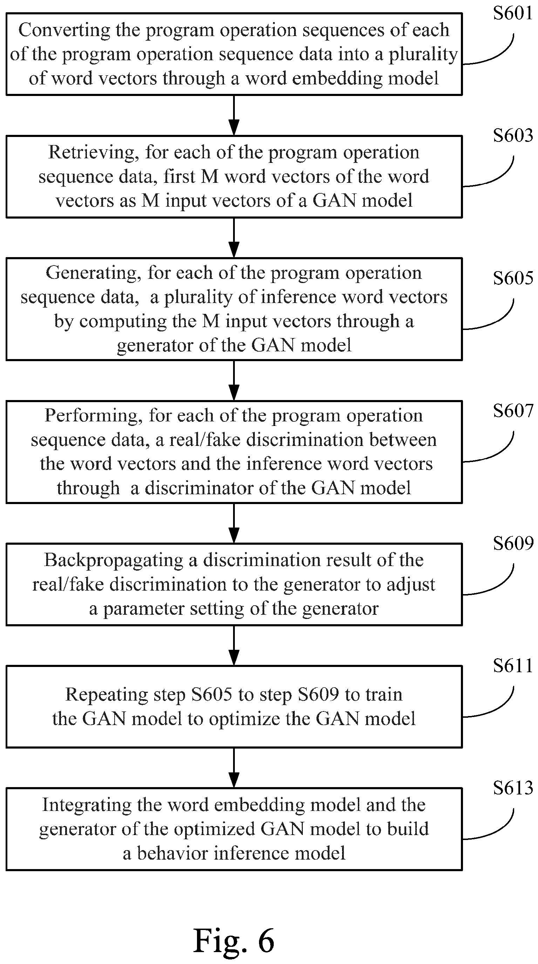

A third embodiment of the present invention is shown in **FIG. 6,** which is a flowchart diagram of a behavior inference model building method according to the present invention. The behavior inference model building method is for use in a behavior inference model building apparatus (e.g., the behavior inference model building apparatus **1** in the foregoing embodiment). The behavior inference model building apparatus comprises a storage and a processor. The storage stores a plurality of program operations sequence data. Each of the program operation sequence data recording a plurality of program operation sequences. The behavior inference model building method is executed by the processor.

First, step **S601** is executed to convert the program operation sequences of each of the program operation sequence data into a plurality of word vectors (e.g., the word vectors **WV** shown in **FIG. 2**) through a word embedding model. Next, for each of the program operation sequence data, step **S603** is executed to retrieve first M word vectors of the word vectors as M input vectors of a Generative Adversarial Network (GAN) model, where M is a positive integer.

For each of the program operation sequence data, step **S605** is executed to generate a plurality of inference word vectors (e.g., the inference word vectors **PWV** shown in **FIG. 2**) by computing the M input vectors through a generator of the GAN model. Then, for each of the program operation sequence data, step **S607** is executed to perform a real/fake discrimination between the word vectors and the inference word vectors through a discriminator of the GAN model. Afterwards, step **S609** is executed to backpropagate a discrimination result of the real/fake discrimination to the generator to adjust a parameter setting of the generator.

In step **S611,** step **S605** to step **S609** are executed repeatedly to train the GAN model to optimize the GAN model. As described in the first embodiment, the generator and the discriminator will adjust the related parameter settings after receiving the discrimination result and re-generating the inference word vectors. Finally, step **S613** is executed to integrate the word embedding model and the generator of the optimized GAN model to build a behavior inference model.

In other embodiments, the program operation sequence is a dynamic program operation sequence, which may be an Application Programming Interface (API) sequence or a system call sequence. In an embodiment, the dynamic programming sequence is retrieved by a tracking program. In other embodiments, the word embedding model is one of a word-to-vector (Word2Vec) model and a One-Hot Encoding model.

In addition to the above steps, the behavior inference model building method in this embodiment can also execute all the steps described in the foregoing embodiments and have all the corresponding functions. Those of ordinary skill in the art can directly understand how this embodiment performs these operations and has these functions based on the foregoing embodiments, so details will not be further described herein.

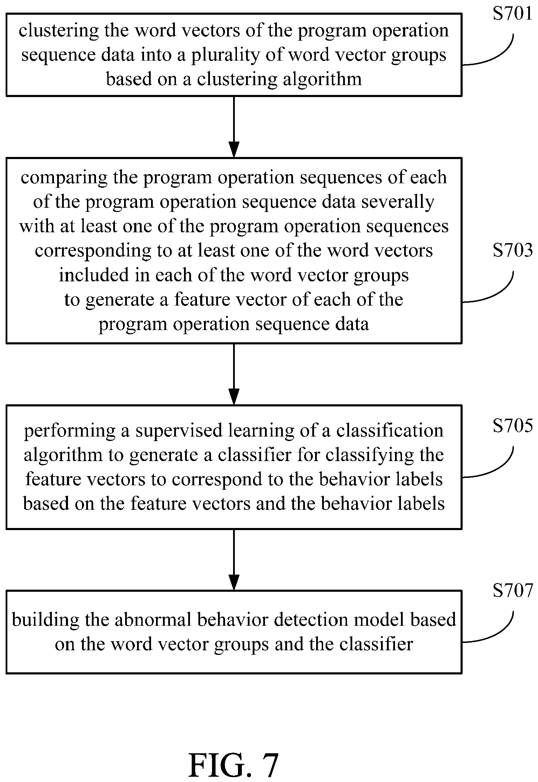

A fourth embodiment of the present invention is shown in **FIG. 7.** The fourth embodiment is an extension of the third embodiment. In this embodiment, step **S613** further comprises: integrating an abnormal behavior detection model, the word embedding model and the generator of the optimized GAN model to build the behavior inference model. **FIG. 7** is a flowchart diagram of building an abnormal behavior detection model according to the present invention.

Step **S701** is executed to cluster the word vectors of the program operation sequence data into a plurality of word vector groups based on a clustering algorithm. Next, step **703** is executed to compare the program operation sequences of each of the program operation sequence data severally with at least one of the program operation sequences corresponding to at least one of the word vectors included in each of the word vector groups to generate a feature vector of each of the program operation sequence data.

Step **705** is executed to perform a supervised learning of a classification algorithm to generate a classifier for classifying the feature vectors to correspond to the behavior labels based on the feature vectors and the behavior labels. Finally, step **707** is executed to build the abnormal behavior detection model based on the word vector groups and the classifier

In other embodiments, the clustering algorithm is one of an Affinity Propagation (AP) clustering algorithm, a Spectral clustering algorithm, a Fuzzy C-means (FCM) clustering algorithm Method, an Iterative Self-Organizing Data Analysis Technique Algorithm (ISODATA) clustering algorithm, a K-means clustering algorithm, a Complete-Linkage (CL) clustering algorithm, a Single-Linkage (SL) clustering algorithm and a Ward's method clustering algorithm, and the classification algorithm is one of a Support Vector Machine (SVM) algorithm, a Decision Tree (DT) algorithm, a Bayes algorithm and a Nearest Neighbors (NN) algorithms.

In addition to the above steps, the behavior inference model building method in this embodiment can also execute all the steps described in the foregoing embodiments and have all the corresponding functions. Those of ordinary skill in the art can directly understand how this embodiment performs these operations and has these functions based on the foregoing embodiments, so details will not be further described herein.

In addition, the foregoing behavior inference model building method of the present invention may be implemented by a non-transitory computer readable medium. The non-transitory computer readable medium stores a computer program including a plurality of codes. After the computer program is loaded and installed in an electronic computing apparatus (e.g., the behavior inference model building apparatus **1**), the codes comprised in the computer program are executed by the processor to execute the behavior inference model building method of the present invention. The non-transitory computer readable medium may be, for example, a read only memory (ROM), a flash memory, a floppy disk, a hard disk, a compact disk (CD), a universal serial bus (USB) disk, a magnetic tape, a database accessible to networks, or any storage media with the same function and well known to people skilled in this field.

According to the above descriptions, the present invention converts the program operation sequences into a plurality of word vectors through word embedding model, inputs the first M word vectors of the word vectors to the generator of the GAN model to generate a plurality of inference word vectors, performs a real/fake discrimination through the discriminator of the GAN model, and backpropagates the discrimination result to the generator to make the generator adjust parameter setting according to the discrimination result. Since the discriminator repeatedly performs the real/fake discrimination between the inference word vectors and the real word vectors and backpropagates the real/fake discrimination result to the generator, the generator can generate the inference word vectors which are much more similar to the real word vectors Therefore, the behavior inference model of the present invention can accurately infer the subsequent program operation sequences in the early execution period of an application to prevent the files on the computer from damaging and prevent the user's personal information from stealing.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

Claims

1. A behavior inference model building apparatus, comprising:

   a storage, being configured to store a plurality of program operations sequence data, each of the program operation sequence data recording a plurality of program operation sequences; and
   a processor electrically connected to the storage, being configured to execute the following steps of:

      (a) converting the program operation sequences of each of the program operation sequence data into a plurality of word vectors through a word embedding model;
      (b) retrieving, for each of the program operation sequence data, first M word vectors of the word vectors as M input vectors of a Generative Adversarial Network (GAN) model f, M being a positive integer;
      (c) generating, for each of the program operation sequence data, a plurality of inference word vectors by computing the M input vectors through a generator of the GAN model;
      (d) performing, for each of the program operation sequence data, a real/fake discrimination between the word vectors and the inference word vectors through a discriminator of the GAN model;
      (e) backpropagating a discrimination result of the real/fake discrimination to the generator to adjust a parameter setting of the generator;
      (f) repeating the step (c) to the step (e) to train the GAN model to optimize the GAN model; and
      (g) integrating the word embedding model and the generator of the optimized GAN model to build a behavior inference model.

2. The behavior inference model building apparatus of Claim 1, wherein the program operation sequences are a dynamic program operation sequence, and the dynamic program operation sequence is an Application Programing Interface (API) sequence or a system call sequence.

3. The behavior inference model building apparatus of Claim 2, wherein the dynamic program operation sequence is retrieved by a tracking program.

4. The behavior inference model building apparatus of any of Claims 1 to 3, wherein the word embedding model is one of a Word-to-Vector (Word2Vec) model and a One-Hot Encoding model.

5. The behavior inference model building apparatus of any of Claims 1 to 4, wherein the program operation sequence data include a plurality of abnormal program operation sequence data, and each of the abnormal program operation sequence data is associated with a malicious program.

6. The behavior inference model building apparatus of any of Claims 1 to 5, wherein the processor further integrates an abnormal behavior detection model, the word embedding model and the generator of the optimized GAN model to build the behavior inference model.

7. The behavior inference model building apparatus of Claim 6, wherein the storage further stores a plurality of behavior labels, each of the program operation sequence data corresponding to one of the behavior labels, and the processor further executes the following steps of:

   clustering the word vectors of the program operation sequence data into a plurality of word vector groups based on a clustering algorithm;
   comparing the program operation sequences of each of the program operation sequence data severally with at least one of the program operation sequences corresponding to at least one of the word vectors included in each of the word vector groups to generate a feature vector of each of the program operation sequence data;
   performing a supervised learning of a classification algorithm to generate a classifier for classifying the feature vectors to correspond to the behavior labels based on the feature vectors and the behavior labels; and
   building the abnormal behavior detection model based on the word vector groups and the classifier.

8. The behavior inference model building apparatus of Claim 7, wherein the clustering algorithm is one of an Affinity Propagation (AP) clustering algorithm, a Spectral clustering algorithm, a Fuzzy C-means (FCM) clustering algorithm, an Iterative Self-Organizing Data Analysis Technique Algorithm (ISODATA) clustering algorithm, a K-means clustering algorithm, a Complete-Linkage (CL) clustering algorithm, a Single-Linkage (SL) clustering algorithm and a Ward's method clustering algorithm, and the classification algorithm is one of a Support Vector Machine (SVM) algorithm, a Decision Tree (DT) algorithm, a Bayes algorithm and a Nearest Neighbors (NN) algorithm.

9. A behavior inference model building method for a behavior inference model building apparatus, the behavior inference model building apparatus comprising a storage and a processor, the storage storing a plurality of program operations sequence data, each of the program operation sequence data recording a plurality of program operation sequences, the behavior inference model building method being executed by the processor and comprising the following steps of:

(a) converting the program operation sequences of each of the program operation sequence data into a plurality of word vectors through a word embedding model;

(b) retrieving, for each of the program operation sequence data, first M word vectors of the word vectors as M input vectors of a Generative Adversarial Network (GAN) model, wherein M being a positive integer;

(c) generating, for each of the program operation sequence data, a plurality of inference word vectors by computing the M input vectors through a generator of the GAN model;

(d) performing, for each of the program operation sequence data, a real/fake discrimination between the word vectors and the inference word vectors through a discriminator of the GAN model;

(e) backpropagating a discrimination result of the real/fake discrimination to the generator to adjust a parameter setting of the generator;

(f) repeating the step (c) to the step (e) to train the GAN model to optimize the GAN model; and

(g) integrating the word embedding model and the generator of the optimized GAN model to build a behavior inference model.

10. The behavior inference model building method of Claim 9, wherein the program operation sequences are a dynamic program operation sequence, and the dynamic program operation sequence is an Application Programing Interface (API) sequence or a system call sequence.

11. The behavior inference model building method of Claim 10, wherein the dynamic program operation sequence is retrieved by a tracking program.

12. The behavior inference model building method of any of Claims 9 to 11, wherein the word embedding model is one of a Word-to-Vector (Word2Vec) model and a One-Hot Encoding model.

13. The behavior inference model building method of any of Claims 9 to 12, wherein the program operation sequence data include a plurality of abnormal program operation sequence data, and each of the abnormal program operation sequence data is associated with a malicious program.

14. The behavior inference model building method of any of Claims 9 to 13, wherein the processor further integrates an abnormal behavior detection model, the word embedding model and the generator of the optimized GAN model to build the behavior inference model.

15. The behavior inference model building method of Claim 14, wherein the storage further stores a plurality of behavior labels, each of the program operation sequence data corresponding to one of the behavior labels, and the processor further executes the following steps of:

clustering the word vectors of the program operation sequence data into a plurality of word vector groups based on a clustering algorithm;

comparing the program operation sequences of each of the program operation sequence data severally with at least one of the program operation sequences corresponding to at least one of the word vectors included in each of the word vector groups to generate a feature vector of each of the program operation sequence data;

performing a supervised learning of a classification algorithm to generate a classifier for classifying the feature vectors to correspond to the behavior labels based on the feature vectors and the behavior labels; and

building the abnormal behavior detection model based on the word vector groups and the classifier.

Behavior inference model building apparatus **1**

Storage **11**

POSD

Processor **13**

FIG. 1

FIG. 2

```
NtAllocateVirtualMemory,NtFreeVirtualMemory,NtAllocateVirtualMemory,__exception__,IsDebuggerPresent,
LdrGetDllHandle,LdrGetDllHandle,__exception__,__exception__,__exception__,LdrGetDllHandle,LdrGetDllH
andle,__exception__,LdrGetDllHandle,LdrGetDllHandle,__exception__,IsDebuggerPresent,IsDebuggerPresen
t,__exception__,IsDebuggerPresent,IsDebuggerPresent,NtClose,NtClose,IsDebuggerPresent,__exception__,
LdrGetDllHandle,LdrGetDllHandle,IsDebuggerPresent,NtClose,IsDebuggerPresent,LdrGetDllHandleLdrGetPro
cedureAddress,LdrGetProcedureAddress,NtAllocateVirtualMemory,NtAllocateVirtualMemory,NtCreateFile,Se
tFilePointer,NtReadFile,NtClose,NtProtectVirtualMemory,NtProtectVirtualMemory,NtProtectVirtualMemory
,NtProtectVirtualMemory,NtProtectVirtualMemory,NtProtectVirtualMemory,LdrGetDllHandle,NtProtectVirtu
alMemory,LdrGetProcedureAddress,LdrGetProcedureAddress,LdrGetProcedureAddress,LdrGetProcedureAddress
,NtProtectVirtualMemory,LdrGetDllHandle,LdrGetDllHandleRegOpenKeyExW,RegQueryValueExW,RegCloseKey,Re
gOpenKeyExW,RegQueryValueExW,RegCloseKey,GetSystemInfo,LdrGetDllHandle,LdrGetProcedureAddress,RegOpe
nKeyExW,NtOpenDirectoryObject,GetSystemDirectoryW,RegOpenKeyExA,RegQueryValueExA,RegQueryValueExA,Re
gCloseKey,RegOpenKeyExA,RegQueryValueExA,RegQueryValueExA,RegQueryValueExA,RegCloseKey,LdrLoadDll,Nt
ProtectVirtualMemory,LdrGetProcedureAddress,NtProtectVirtualMemory,LdrGetDllHandle,NtProtectVirtualM
emory,LdrGetProcedureAddress,NtProtectVirtualMemory,LdrGetDllHandle,NtProtectVirtualMemory,LdrGetPro
cedureAddress,NtProtectVirtualMemory,LdrGetDllHandle,NtProtectVirtualMemory,LdrGetProcedureAddress,N
tProtectVirtualMemory,LdrGetDllHandle,LdrGetDllHandle,LdrLoadDll,NtProtectVirtualMemory,LdrGetProced
ureAddress,NtProtectVirtualMemory,LdrGetDllHandle,LdrGetDllHandle,LdrLoadDll,NtProtectVirtualMemory,
LdrGetProcedureAddress,NtProtectVirtualMemory,LdrGetDllHandle,NtProtectVirtualMemory,LdrGetProcedure
Address,NtProtectVirtualMemory,LdrGetDllHandle,LdrGetDllHandleGetSystemTimeAsFileTime,RegOpenKeyExA,
RegQueryValueExA,RegCloseKey,RegOpenKeyExA,RegQueryValueExA,RegCloseKey,RegOpenKeyExW,RegQueryValueE
xW,RegCloseKey,NtClose,NtClose,LdrLoadDll,NtProtectVirtualMemory,LdrGetProcedureAddress,NtProtectVir
tualMemory,LdrGetDllHandle,LdrGetDllHandle,GetSystemMetrics,GetSystemMetrics,GetSystemMetrics,GetSys
temMetrics,GetSystemMetrics,GetSystemMetrics,GetSystemMetrics,LdrLoadDll,NtProtectVirtualMemory,LdrG
etProcedureAddress,NtProtectVirtualMemory,LdrGetDllHandle,NtProtectVirtualMemory,LdrGetProcedureAddr
ess,NtProtectVirtualMemory,LdrGetDllHandle,NtProtectVirtualMemory,LdrGetProcedureAddress,NtProtectVi
rtualMemory,LdrGetDllHandle,NtProtectVirtualMemory,LdrGetProcedureAddress,NtProtectVirtualMemory,Ldr
GetDllHandle,NtProtectVirtualMemory,LdrGetProcedureAddress,NtProtectVirtualMemory,NtFreeVirtualMemor
y,CreateToolhelp32Snapshot,Module32FirstW,Module32NextW,Module32NextW,Module32NextW,Module32NextW,Mo
```

POSD

FIG. 3

FIG. 4

FIG. 5

Converting the program operation sequences of each of the program operation sequence data into a plurality of word vectors through a word embedding model

S601

Retrieving, for each of the program operation sequence data, first M word vectors of the word vectors as M input vectors of a GAN model

S603

Generating, for each of the program operation sequence data, a plurality of inference word vectors by computing the M input vectors through a generator of the GAN model

S605

Performing, for each of the program operation sequence data, a real/fake discrimination between the word vectors and the inference word vectors through a discriminator of the GAN model

S607

Backpropagating a discrimination result of the real/fake discrimination to the generator to adjust a parameter setting of the generator

S609

Repeating step S605 to step S609 to train the GAN model to optimize the GAN model

S611

Integrating the word embedding model and the generator of the optimized GAN model to build a behavior inference model

S613

# Fig. 6

clustering the word vectors of the program operation sequence data into a plurality of word vector groups based on a clustering algorithm

S701

comparing the program operation sequences of each of the program operation sequence data severally with at least one of the program operation sequences corresponding to at least one of the word vectors included in each of the word vector groups to generate a feature vector of each of the program operation sequence data

S703

performing a supervised learning of a classification algorithm to generate a classifier for classifying the feature vectors to correspond to the behavior labels based on the feature vectors and the behavior labels

S705

building the abnormal behavior detection model based on the word vector groups and the classifier

S707

# FIG. 7

Europäisches
Patentamt

European
Patent Office

Office européen
des brevets

**EUROPEAN SEARCH REPORT**

Application Number

EP 17 20 6738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Weiwei Hu, Ying Tan: "Generating Adversarial Malware Examples for Black-Box Attacks Based on GAN", , 20 February 2017 (2017-02-20), 20 June 2017 (2017-06-20), XP002781726, Beijing, China Retrieved from the Internet: URL:https://arxiv.org/pdf/1702.05983.pdf [retrieved on 2018-06-06] * page 1, right-hand column, line 1 - line 4 * * page 2, left-hand column, line 23 - page 4, right-hand column, line 15 * * page 6, left-hand column, line 23 - right-hand column, line 30; figure 1 * ----- | 1-15 | INV. G06N3/08 H04L29/06 |
| A | WANG KUNFENG ET AL: "Generative adversarial networks: introduction and outlook", IEEE/CAA JOURNAL OF AUTOMATICA SINICA, vol. 4, no. 4, 15 September 2017 (2017-09-15), pages 588-598, XP011660509, ISSN: 2329-9266, DOI: 10.1109/JAS.2017.7510583 [retrieved on 2017-09-15] * page 588, left-hand column, line 1 - page 593, left-hand column, line 14 * * page 594, left-hand column, line 18 - right-hand column, line 10; figures 1-4 * ----- | 1-15 | TECHNICAL FIELDS SEARCHED (IPC) G06N H04L |
| A | US 2016/329044 A1 (CAO LIANGLIANG [US] ET AL) 10 November 2016 (2016-11-10) * paragraph [0033] - paragraph [0036] * * paragraph [0041] - paragraph [0043] * * paragraph [0049] - paragraph [0052]; claims 10,12,16,18; figures 1-3 * ----- -/-- | 1-15 | |

The present search report has been drawn up for all claims

| Place of search | Date of completion of the search | Examiner |
|---|---|---|
| The Hague | 7 June 2018 | Schwibinger, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 20 6738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 705 904 B1 (DAVIS ANDREW [US] ET AL) 11 July 2017 (2017-07-11) * column 3, line 3 - column 4, line 8 * * column 7, line 57 - column 8, line 58; claims 1,5,6,13,17; figure 1 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 7 June 2018 | Schwibinger, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 6738

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2018

| Patent document cited in search report | | Publication date | Patent family member(s) | | Publication date |
|---|---|---|---|---|---|
| US 2016329044 | A1 | 10-11-2016 | US 2016328388 A1<br>US 2016329044 A1<br>US 2017162189 A1 | | 10-11-2016<br>10-11-2016<br>08-06-2017 |
| US 9705904 | B1 | 11-07-2017 | US 9705904 B1<br>US 9721097 B1<br>WO 2018017953 A1 | | 11-07-2017<br>01-08-2017<br>25-01-2018 |

EPO FORM P0459

For more details about this annex : see Official Journal of the European Patent Office, No. 12/82